# EUROPEAN PATENT SPECIFICATION

(11) **EP 2 409 088 B1**
(45) Date of publication and mention of the grant of the patent: **15.07.2015**
(21) Application number: 10753659.1
(22) Date of filing: 12.03.2010
(51) Int. Cl.: F24F 1/00, F24F 13/08, F24F 3/16, F24F 11/00

(54) **AIR CONDITIONER**
KLIMAANLAGE
CLIMATISEUR

(30) Priority: 18.03.2009 KR 20090023209
(43) Date of publication of application: 25.01.2012
(73) Proprietor: LG Electronics Inc., Seoul 150-721 (KR)
(72) Inventor: SHIM, Ho Jin, Changwon-si Kyungsangnam-do 641-110 (KR); LEE, Sung Hwa, Changwon-si Kyungsangnam-do 641-110 (KR); PARK, Tae Byoung, Changwon-si Kyungsangnam-do 641-110 (KR); PARK, Sung Kwan, Changwon-si Kyungsangnam-do 641-110 (KR)
(74) Representative: Cabinet Plasseraud
(86) International application number: PCT/KR2010/001543
(87) International publication number: WO 2010/107209

(56) References cited:
- JP-A- 2003 014 267
- JP-A- 2003 014 267
- KR-A- 20080 055 450
- KR-U- 19980 065 269
- US-B1- 6 996 029

## Description

### Technical Field

The present invention relates to an air conditioner for air-conditioning indoor, and more particularly, to an air conditioner having a harmful insect extermination device for exterminating harmful insects.

### Background Art

In general, an air conditioner cools and heats indoor using a refrigerating cycle of a refrigerant formed with a compressor, a condenser, an expanding device, and an evaporator in order to provide more comfortable indoor environment to a user, or purifies air using a filter or an electric dust collector.

Korean Unexamined Utility Model Application No. 1999-0016601 discloses an air conditioner having a mosquito extermination device that can prevent approach of female mosquitoes by generating ultrahigh frequency waves to the front of an indoor device.

In an air conditioner having a conventional mosquito extermination device, because a mosquito extermination device is installed in a front surface of an indoor device to generate ultrahigh frequency waves to the front thereof, in an indoor area, an arriving area of ultrahigh frequency waves generated by the mosquito extermination device is not wide.

JP 2003-14267 discloses an air conditioner according to the preamble of appending claim 1.

### Disclosure of Invention

### Technical Problem

The present invention has been made in an effort to solve the above problems, and the present invention provides an air conditioner for exterminating harmful insects while moving a position of a harmful insect extermination device by a wind adjustment member.

The present invention further provides an air conditioner for effectively exterminating harmful insects of indoor while minimizing flow resistance of discharge air.

The present invention further provides an air conditioner for minimizing damage of a harmful insect extermination device.

### Solution to Problem

According to an aspect of the present invention, there is provided an air conditioner including: a main body in which an air inhalant port and an air discharge port are formed to discharge air after inhaling air and performing air-conditioning; a wind adjustment member rotatably disposed at the main body to adjust the wind of air discharged to the air discharge port; a wind adjustment member driving device for rotating the wind adjustment member; and a harmful insect extermination device installed in the wind adjustment member to exterminate harmful insects while changing a position thereof according to a rotation of the wind adjustment member.

The wind adjustment member may be disposed to open and shut the air discharge port, and when the wind adjustment member shuts the air discharge port, the harmful insect extermination device may be installed in a surface toward the inside of the main body.

The air conditioner may further include a harmful insect extermination device holder in which the harmful insect extermination device is mounted and for protecting the harmful insect extermination device.

The harmful insect extermination device holder may have a curved portion at a periphery of the harmful insect extermination device.

The harmful insect extermination device holder may be a protruding portion integrally protruded with an air guidance surface of the wind adjustment member.

The harmful insect extermination device holder may be an insertion groove formed to insert the harmful insect extermination device into an air guidance surface of the wind adjustment member.

The harmful insect extermination device holder may be a harmful insect extermination device case coupled to an air guidance surface of the wind adjustment member.

The air conditioner may further include a case heat-insulation member disposed between the harmful insect extermination device case and the wind adjustment member.

The harmful insect extermination device may be a speaker for generating sound waves of a frequency band of male mosquitoes, and the harmful insect extermination device holder may have an opening surface for passing through sound waves generated in the speaker.

The air conditioner may further include an internal heat-insulation member positioned between the harmful insect extermination device holder and the speaker.

The air conditioner may further include a holder heat-insulation member installed to cover a surface other than an opening surface of the harmful insect extermination device holder.

The harmful insect extermination device may be disposed oblique to an air guidance direction of the wind adjustment member.

The harmful insect extermination device may be disposed orthogonal to an air guidance direction of the wind adjustment member.

The harmful insect extermination device may be disposed at the front end of the wind adjustment member.

The harmful insect extermination device and the wind adjustment member may be disposed parallel to an air guidance direction.

The harmful insect extermination device may be disposed at each of a plurality of air guidance surfaces of the wind adjustment member.

The air conditioner may include a main controller installed in the main body to control the wind adjustment member driving device and a harmful insect extermination device controller connected to the main controller using a first lead line and connected to the harmful insect extermination device using a second lead line to control the harmful insect extermination device.

The main controller may control the harmful insect extermination device controller by allowing the harmful insect extermination device to generate sound waves of a frequency band of male mosquitoes upon performing operation for exterminating harmful insects and control a mode of the wind adjustment member driving device to a reciprocation swing mode so that the wind adjustment member performs a reciprocation swing.

### Advantageous Effects of Invention

Because the harmful insect extermination device exterminates harmful insects while moving, an area in which harmful insects can be positioned at indoor can be minimized and harmful insects can be effectively exterminated with a minimum harmful insect extermination device.

### Brief Description of Drawings

FIG. 1 is a perspective view illustrating an operating air conditioner according to a first exemplary embodiment of the present invention;
FIG. 2 is a perspective view illustrating a stopped air conditioner according to a first exemplary embodiment of the present invention;
FIG. 3 is an exploded perspective view illustrating an air conditioner according to a first exemplary embodiment of the present invention;
FIG. 4 is a block diagram illustrating a control process of an air conditioner according to a first exemplary embodiment of the present invention;
FIG. 5 is a longitudinal cross-sectional view of an air conditioner when a wind adjustment member shown in FIG. 1 discharges upward air-conditioned air;
FIG. 6 is a longitudinal cross-sectional view of an air conditioner when a wind adjustment member shown in FIG. 1 discharges downward air-conditioned air;
FIG. 7 is a longitudinal cross-sectional view of an air conditioner when a wind adjustment member shown in FIG. 1 shuts an air discharge port;
FIG. 8 is a partially enlarged exploded perspective view illustrating a wind adjustment member of an air conditioner according to a first exemplary embodiment of the present invention;
FIG. 9 is a longitudinal cross-sectional view of an operating air conditioner according to a second exemplary embodiment of the present invention;
FIG. 10 is an enlarged perspective view illustrating a wind adjustment member of an air conditioner according to a second exemplary embodiment of the present invention; and
FIG. 11 is a longitudinal cross-sectional view of an operating air conditioner according to a third exemplary embodiment of the present invention.

### Best Mode for Carrying out the Invention

Hereinafter, exemplary embodiments according to the present invention will be described in detail with reference to the accompanying drawings.

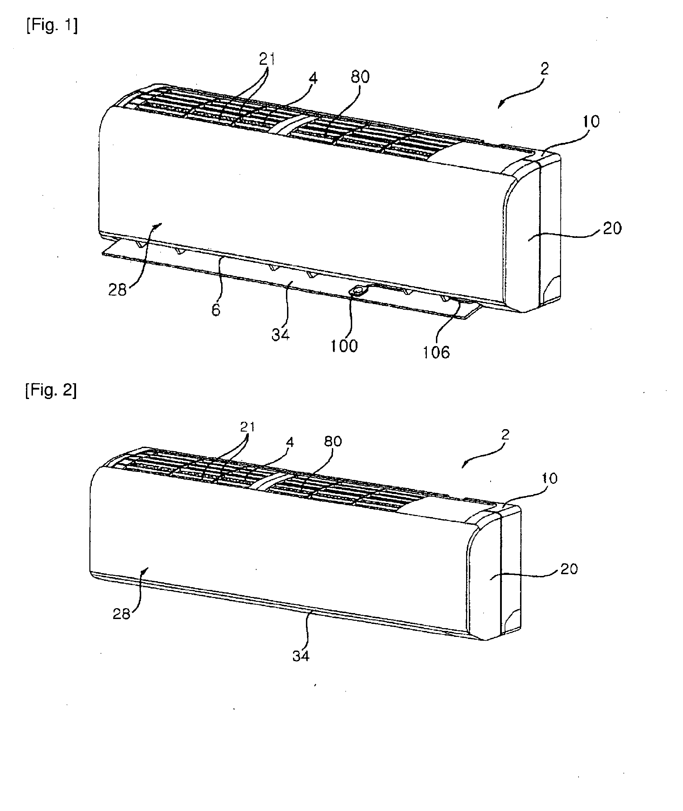

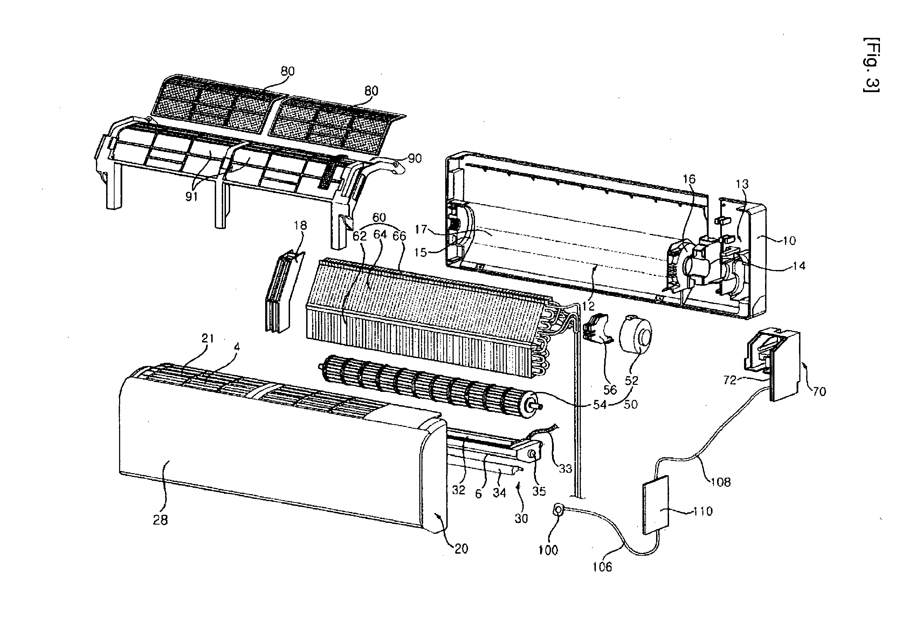

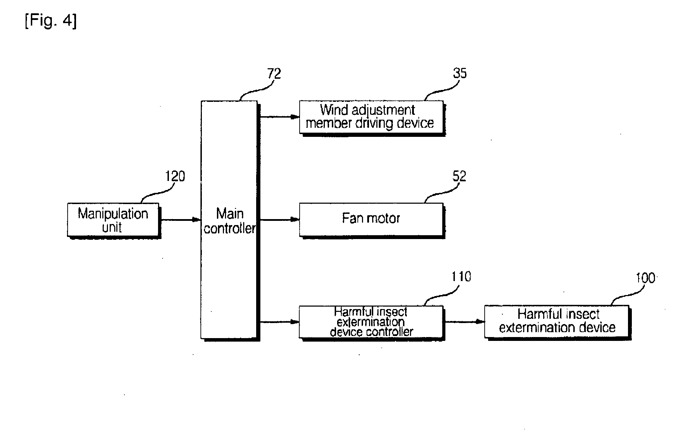

FIG. 1 is a perspective view illustrating an operating air conditioner according to a first exemplary embodiment of the present invention, FIG. 2 is a perspective view illustrating a stopped air conditioner according to a first exemplary embodiment of the present invention, FIG. 3 is an exploded perspective view illustrating an air conditioner according to a first exemplary embodiment of the present invention, and FIG. 4 is a block diagram illustrating a control process of an air conditioner according to a first exemplary embodiment of the present invention.

The air conditioner according to the present exemplary embodiment includes a main body 2 and a harmful insect extermination device 100.

In the main body 2, an air inhalant port 4 for inhaling indoor air and an air discharge port 6 for discharging air-conditioned air are formed.

The main body 2 is an air conditioning unit for inhaling air to the air inhalant port 4, air-conditioned air at the inside, and discharging air through the air discharge port 6.

The main body 2 can be formed in a stand type air conditioner, ceiling air conditioner, and wall-mounted air conditioner, and hereinafter, a wall-mounted air conditioner is described as an example.

The main body 2 includes a chassis 10, a front frame 20, an inhalation grill 21, a front panel 28, and a discharge unit 30.

In the main body 2, the air inhalant ports 4 are each formed in a front surface and an upper surface of the main body 2, and the air discharge port 6 is formed in a lower surface of the main body 2, and the front panel 28 advances to the front of the main body 2, or rotates about an upper part or a lower part, and thus an air inhalation passage can be formed between the front panel 28 and a front surface of the main body 2.

In the main body 2, the air inhalant port 4 can be formed in an upper surface of the main body 2, the air discharge port 6 can be formed in a lower surface of the main body 2, and the front panel 28 can be disposed to cover a front surface of the main body 2.

Hereinafter, in the main body 2, the air inhalant port 4 is formed in an upper part of the main body 2, particularly at the upper surface side of the main body 2, the air discharge port 6 is formed in a lower part of the main body 2, particularly at the lower surface side of the main body 2, and the front panel 28 rotates toward the front about an upper part and a lower part in order to perform an AS service of the inside of the main body 2 while forming a front external appearance of the air conditioner.

The chassis 10 is a kind of case installed in an indoor wall and in which a ventilation flow path for passing through air is formed, and for installing various parts.

In the chassis 10, a ventilation flow path guide 12 for guiding air inhaled into the air inhalant port 4 to the air discharge port 6 is formed.

In the chassis 10, an electronic unit 13 for installing various electronic parts is formed at the side of one of the left and the right of the ventilation flow path guide 12.

The ventilation flow path guide 12 forms a flow path of a fan 54 to be described later and includes left and right guides 15 and 16 protruded to the front from the chassis 10 and a central guide 17 formed between the left and right guides 15 and 16.

In one of the left and right guides 15 and 16, a heat exchanger supporter 18 for forming a flow path of air is installed while supporting a heat exchanger 60.

A fan motor 52 to be described later is provided in the electronic unit 13, and a motor installation unit 14 for supporting the fan motor 52 is protruded to the front.

In the chassis 10, a control box 70, which is a controller for controlling the air conditioner in the electronic unit 13 is installed.

In the control box 70, both a main controller 72 for controlling the fan motor 52 of a ventilator 50 and a wind adjustment member driving device 35 and a harmful insect extermination device controller 110 for controlling the harmful insect extermination device 100 are mounted.

The front frame 20 forms space together with the chassis 10 between the front frame 20 and the chassis 10 and is disposed at the front of the chassis 10.

The front frame 20 forms a ventilation flow path together with the ventilation flow path guide 12 of the chassis 10 and covers the electronic unit 13 formed in the chassis 10 to protect the electronic unit 13.

Openings are each formed in an upper surface and a front surface of the front frame 20, an opening of an upper surface operates as the air inhalant port 4, and a front opening 5 operates as a service hole for attachment and detachment or performing an AS service of the filter 80 to be described.

In the front frame 20, the front opening 5 is formed in the front-rear direction at the front of the ventilation flow path guide 12 of the chassis 10, and an upper opening is vertically formed at the upside of the front of the ventilation flow path guide 12 of the chassis 10.

The inhalation grill 21 protects the downside thereof while inhaling indoor air into the inside of the main body 2 and is formed in a grill shape in the air inhalant port 4, which is an upper opening of the front frame 20.

The discharge unit 30 guides the discharge of air-conditioned air within the main body 2 and is assembled using a fastening means such as a fastening member or a hanger means such as a hook in at least one of the chassis 10 and the front frame 20.

In the discharge unit 30, a drain unit 32 for receiving condensation water dropped from a heat exchanger 60 to be described later is formed in an upper surface thereof.

A drain connection hose 33 for guiding condensation water to the outside of the main body 2 is connected to the drain unit 32, and the air discharge port 6 is formed in a lower part of the drain unit 32.

A wind adjustment device for adjusting the wind of air passing through the air discharge port 6 is installed in the discharge unit 30.

The wind adjustment device includes a wind adjustment member 34 rotatably disposed at the main body 2, particularly the discharge unit 30 in order to adjust the wind while guiding air passing through the air discharge port 6, and a wind adjustment member driving device 35 for rotating the wind adjustment member 34.

The wind adjustment member 34 includes a lateral wind adjustment member for adjusting the lateral wind of air passing through the air discharge port 6 by rotating about a vertical axis and a vertical wind adjustment member for adjusting the vertical wind of air passing through the discharge port 6 by rotating about a horizontal axis.

The wind adjustment member driving device 35 is connected to the lateral wind adjustment member to rotate the lateral wind adjustment member about a vertical axis and is connected to the vertical wind adjustment member to vertically rotate the vertical wind adjustment member about a horizontal axis.

The wind adjustment member 34 is rotatably disposed so that one of the lateral wind adjustment member and the vertical wind adjustment member open and shut the air discharge port 6, and hereinafter, the vertical wind adjustment member is disposed to open and shut the air discharge port 6, and the wind adjustment member driving device 35 is formed with a wind adjustment motor installed in a surface of one side of the left side and the right side of the discharge unit 30 to rotate the vertical wind adjustment member.

In the main body 2, a ventilator 50 for inhaling air to the air inhalant port 4, for passing through air to the inside of the main body 2, and for discharging air to the air discharge port 6, a heat exchanger 60 for exchanging heat of air inhaled into the inside of the main body 2 with that of a refrigerant, a filter 80 for purifying air inhaled into the air inhalant port 4, and a filter frame 90 in which the filter 80 is mounted are installed.

The ventilator 50 includes a fan motor 52 installed in the motor installation unit 14 formed in the chassis 10, particularly in the electronic unit 13, and a fan 54 installed in a rotation axis of the fan motor 52 and positioned at a ventilation flow path guide 12.

The fan 54 is formed with a cross flow fan formed laterally long between ventilation flow path guides 15, 16, and 17, particularly between left and right flow path guides 15 and 16.

The ventilator 50 further includes a motor cover 56 installed in the chassis 10 to cover the fan motor 52.

The heat exchanger 60 is disposed to position at space of the main body 2, particularly at the rear of a front portion of the front frame 20 to position between the air inhalant port 4 and the fan 54, and the lower end thereof is positioned at the upper side of the drain unit 32.

The heat exchanger 60 includes a vertical portion 62 vertically positioned at the upper side of the drain unit 32, a front inclined portion 64 formed to be inclined toward the upper side of the rear side from the upper side of the vertical portion 62, and a rear inclined portion 66 formed to be inclined toward the lower side of the rear from an upper part of the front inclined portion 64.

The filter frame 90 is positioned between the air inhalant port 4 and the heat exchanger 60.

The filter frame 90 has an opening 91 for passing through air and in which the filter 80 is disposed.

The harmful insect extermination device 100 removes or exterminates harmful insects such as mosquitoes within indoor in which the air conditioner performs air-conditioning.

The harmful insect extermination device 100 can be formed with a speaker, which is a sound wave generator that can generate sound waves of a specific frequency band in which harmful insects such as mosquitoes evades, or an insecticide incense generator for killing harmful insects such as mosquitoes, and hereinafter, a harmful insect extermination device formed with a speaker is described.

When the harmful insect extermination device 100 is installed in the wind adjustment member 34, upon rotating the wind adjustment member 34, the harmful insect extermination device 100 can generate sound waves in a wide area while moving together with the wind adjustment member 34, and the air conditioner can generate sound waves with a wide area of an indoor in a simple structure without a harmful insect extermination device moving device such as a motor for moving the harmful insect extermination device, and a harmful insect extermination effect when using a plurality of harmful insect extermination devices 100 can be obtained using one harmful insect extermination device 100.

That is, when the harmful insect extermination device 100 is installed in the wind adjustment member 34, the harmful insect extermination device 100 can generate sound waves in various directions and a wide area while changing a position thereof about a rotation center of the wind adjustment member 34.

The air conditioner according to the present exemplary embodiment includes a main controller 72 installed in the main body 2 to control the fan motor 52 and the wind adjustment member driving device 35, a harmful insect extermination device controller 110 connected to the main controller 72 using a first lead line 106 and connected to the harmful insect extermination device 100 using a second lead line 108, and a manipulation unit 120 for manipulating harmful insect extermination operation while manipulating operation of the main body 2.

The main controller 72 controls the harmful insect extermination device controller 110 while driving the fan motor 52 and the wind adjustment member driving device 35 upon performing an air-conditioning operation such as a cooling operation. In this case, air-conditioned air such as cooling air is guided and discharged to the wind adjustment member 34, the wind adjustment member 34 widely disperses air-conditioned air while rotating, and the harmful insect extermination device 100 generates sound waves in a wide area of indoor while moving a position thereof with mounted in the wind adjustment member 34.

The main controller 72 controls the harmful insect extermination device controller 110 so that the harmful insect extermination device 100 generates sound waves of a frequency band of a male mosquito upon performing a harmful insect extermination operation and controls a mode of the wind adjustment member driving device 35 to a reciprocation swing mode so that the wind adjustment member 34 performs a reciprocation swing.

In general, mosquitoes biting a human body are female mosquitoes copulated with male mosquitoes and after female mosquitoes copulated with male mosquitoes, the female mosquito evades sound waves of frequency bands of the male mosquitoes and thus in an indoor area in which sound waves of a specific frequency band (for example, 370±10Hz) of the male mosquitoes is transmitted, the number of mosquitoes biting a human body is minimized.

When a harmful insect extermination operation is input through the manipulation unit 120, the main controller 72 controls the harmful insect extermination device controller 110 while driving the wind adjustment member driving device 35 instead of driving the fan motor 52. In this case, the wind adjustment member 34 rotates, and the harmful insect extermination device 100 generates sound waves in a wide area of indoor while moving a position thereof with mounted in the wind adjustment member 34.

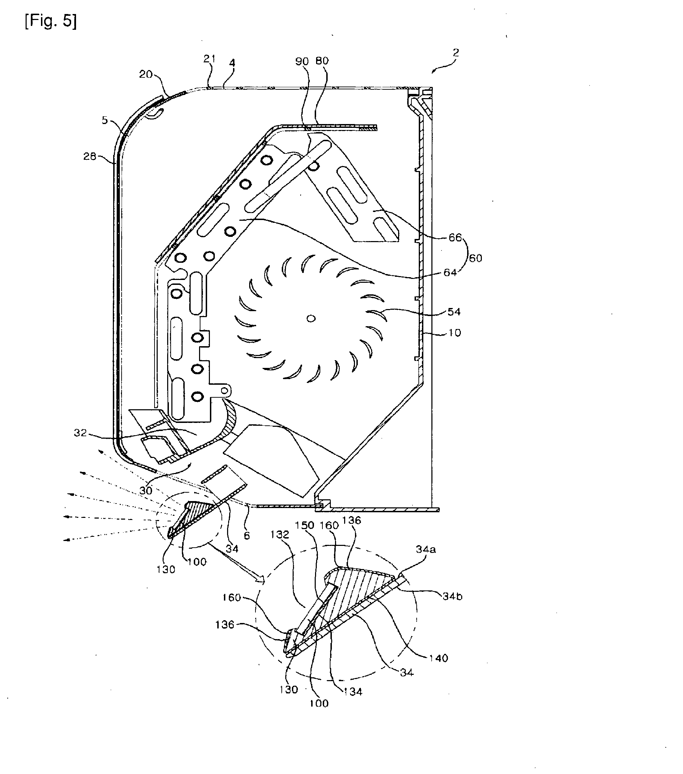

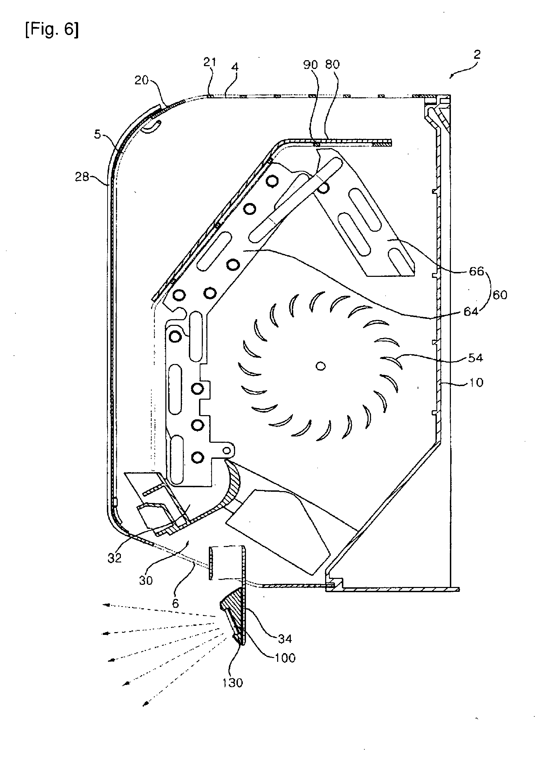

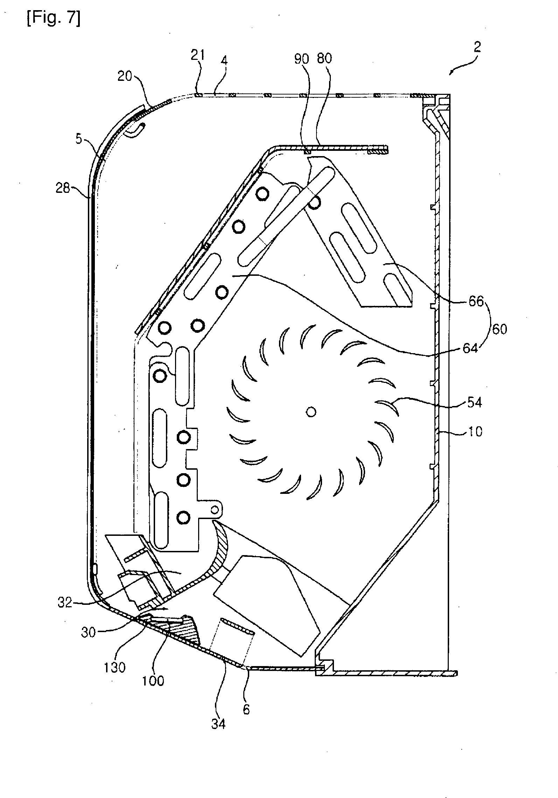

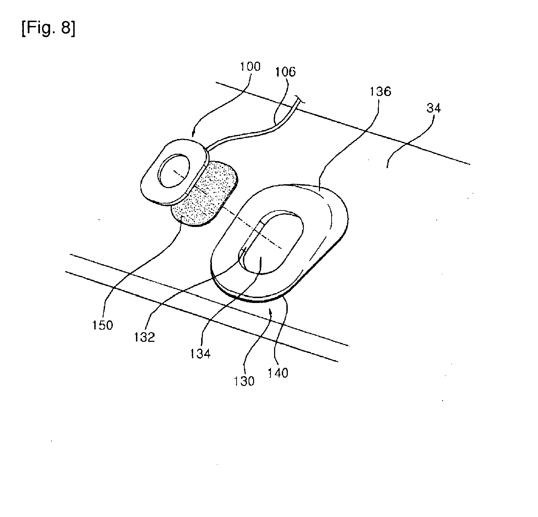

FIG. 5 is a longitudinal cross-sectional view of an air conditioner when a wind adjustment member shown in FIG. 1 discharges air-conditioned air to an upper part of indoor, FIG. 6 is a longitudinal cross-sectional view of an air conditioner when a wind adjustment member shown in FIG. 1 discharges air-conditioned air to a lower part of indoor, FIG. 7 is a longitudinal cross-sectional view of an air conditioner when a wind adjustment member shown in FIG. 1 closes an air discharge port, and FIG. 8 is an enlarged perspective view illustrating a wind adjustment member of an air conditioner according to a first exemplary embodiment of the present invention.

The harmful insect extermination device 100 is a speaker for generating sound waves of a frequency band of male mosquitoes, and when the harmful insect extermination device 100 is disposed oblique to an air guidance direction of the wind adjustment member 34, the harmful insect extermination device 100 can generate sound waves in a direction most adjacent to a discharge guidance direction of air-conditioned air and can reduce flow resistance of discharge air.

When the wind adjustment member 34 opens the discharge port 6, the harmful insect extermination device 100 is disposed oblique by a predetermined angle to the wind adjustment member 34 in an indoor direction.

The harmful insect extermination device 100 can be directly mounted in the wind adjustment member 34 by an adhesion means such as adhesives, and it is preferable that the harmful insect extermination device 100 is mounted in the harmful insect extermination device holder 130 and is protected by the harmful insect extermination device holder 130, and hereinafter, the harmful insect extermination device 100 having the harmful insect extermination device holder 130 is described.

The harmful insect extermination device holder 130 can be positioned at air guidance surfaces 34a and 34b of the wind adjustment member 34 and can be positioned at the front end or the rear end of the wind adjustment member 34, and hereinafter, in the present exemplary embodiment, the harmful insect extermination device holder 130 positioned at the air guidance surfaces 34a and 34b of the wind adjustment member 34 is described.

The harmful insect extermination device holder 130 fixes the harmful insect extermination device 100 to the wind adjustment member 34 and protects the harmful insect extermination device 100.

The harmful insect extermination device holder 130 can be formed with a protruding portion integrally protruded with an air guidance surface of the wind adjustment member 34.

The harmful insect extermination device holder 130 can have an insertion groove formed to insert the harmful insect extermination device 100 in the air guidance surface 34a of the wind adjustment member 34.

After being separately manufactured from the wind adjustment member 34, the harmful insect extermination device holder 130 can be formed in a harmful insect extermination device case coupled to an air guidance surface of the wind adjustment member 34 as a hanger means such as a hook, an adhesion means of adhesives, and a fastening means such as a screw.

Hereinafter, in the present exemplary embodiment, the harmful insect extermination device holder 130 is formed as a harmful insect extermination device case.

The harmful insect extermination device holder 130 has an opening surface 132 for passing through sound waves in order to propagate sound waves generated in a speaker, which is the harmful insect extermination device 100 to indoor, and has space for inserting and housing the harmful insect extermination device 100 therein.

In the harmful insect extermination device holder 130, in order to propagate to the maximum, sound waves generated in a speaker, which is the harmful insect extermination device 100 to indoor, the opening surface 132 is formed larger than the harmful insect extermination device 100.

In order to propagate sound waves generated in a speaker, which is the harmful insect extermination device 100 in an indoor direction, i.e. in an opposite direction of the main body 2, the harmful insect extermination device holder 130 has a high inclined surface as an inner surface 134 opposite to the harmful insect extermination device 100 advances to the rear end of the wind adjustment member 34.

When the harmful insect extermination device holder 130 is installed to have a step portion in the air guidance surfaces 34a and 34b of the wind adjustment member 34, air discharged through the air discharge port 6 has large flow resistance and thus it is preferable that the harmful insect extermination device holder 130 is formed in a shape for minimizing flow resistance.

As a periphery of an opening surface 132 is formed with a rounded curved portion 136, it is preferable that the harmful insect extermination device holder 130 does not have a step portion in the air guidance surfaces 34a and 34b of the wind adjustment member 34.

The air conditioner according to the present exemplary embodiment has a heat-insulation member and a desiccating member (hereinafter, referred to as a 'heat-insulation member') for minimizing damage or an erroneous operation of the harmful insect extermination device 100 due to cool air.

An insulation member (hereinafter, referred to as a 'case insulation member') 140 is disposed between the harmful insect extermination device holder 130 and the wind adjustment member 34, and a heat-insulation member (hereinafter, referred to as an 'internal heat-insulation member') 150 is disposed between the harmful insect extermination device holder 130 and the harmful insect extermination device 100.

A heat-insulation member 160 (hereinafter, referred to as a 'holder heat-insulation member') for covering a surface other than an opening surface is disposed at the harmful insect extermination device holder 130.

The case heat-insulation member 140, the heat-internal insulation member 150, and the holder heat-insulation member 160 prevent from being lowered the harmful insect extermination device 100 to a low temperature, prevent moisture generated by cool air from penetrating through the harmful insect extermination device 100, and are attached by adhesives.

When the wind adjustment member 34 shuts the discharge port 6, it is preferable that the harmful insect extermination device 100 is installed at a position covered by the wind adjustment member 34, and in the air guidance surfaces 34a and 34b of the wind adjustment member 34, when the wind adjustment member 34 shuts the air discharge port 6, the harmful insect extermination device 100 is installed in the surface 34a of the wind adjustment member 34 facing the inside of the main body 2.

Operation of the present invention having the above-described configuration is described as follows.

First, an air-conditioning operation such as a cooling operation, a heating operation, and a dehumidification operation is input through the manipulation unit 120, if a harmful insect extermination operation is not input, the main controller 72 drives the fan motor 52 and drives a mode of the wind adjustment member driving device 35 to an opening mode.

In an opening mode of the wind adjustment member driving device 35, the wind adjustment member 34 opens the air discharge port 6 while rotating by the wind adjustment member driving device 35, and when the fan motor 52 is driven, the fan 54 rotates.

When the fan 54 rotates, indoor air is inhaled into the main body 2 through the air inhalant port 4, is purified by the filter 80 and exchanges heat with the heat exchanger 60, and is guided and discharged by the wind adjustment member 34 while passing through the air discharge port 6.

Upon performing such an air-conditioning operation, when a swing discharge mode is input through the manipulation unit 120, the main controller 72 drives the wind adjustment member driving device 35 in forward and inverse directions while driving the fan motor 52, the wind adjustment member 34 performs a vertical reciprocation swing by the wind adjustment member driving device 35, and air passing through the air discharge port 6 is vertically dispersed.

Upon performing an air-conditioning operation, when the user inputs a harmful insect extermination operation through the manipulation unit 120, the main controller 72 determines the input of a swing discharge mode, and when the air conditioner is in a swing discharge mode while performing an air-conditioning operation, the main controller 72 controls the harmful insect extermination device controller 110, and when the air conditioner is not in a swing discharge mode while performing an air-conditioning operation, the main controller 72 controls the harmful insect extermination device controller 110 while driving the wind adjustment member driving device 35 in front and inverse directions.

Upon driving the wind adjustment member driving device 35 and controlling the harmful insect extermination device controller 110, air passing through the air discharge port 6 is vertically dispersed and discharged, and sound waves generated in the harmful insect extermination device 100 are propagated in a wide area while being vertically dispersed.

When an air-conditioning operation such as a cooling operation, a heating operation, and a dehumidification driving is not input and a harmful insect extermination operation is input through the manipulation unit 120, the main controller 72 drives the wind adjustment member driving device 35 in an opening mode instead of driving the fan motor 52, then drives the wind adjustment member driving device 35 in forward and reverse directions, and controls the harmful insect extermination device controller 110.

Upon stopping the fan motor 52, driving the wind adjustment member driving device 35, and controlling the harmful insect extermination device controller 110, air is not discharged from the main body 2, and sound waves generated in the harmful insect extermination device 100 are propagated in a wide area while being vertically dispersed.

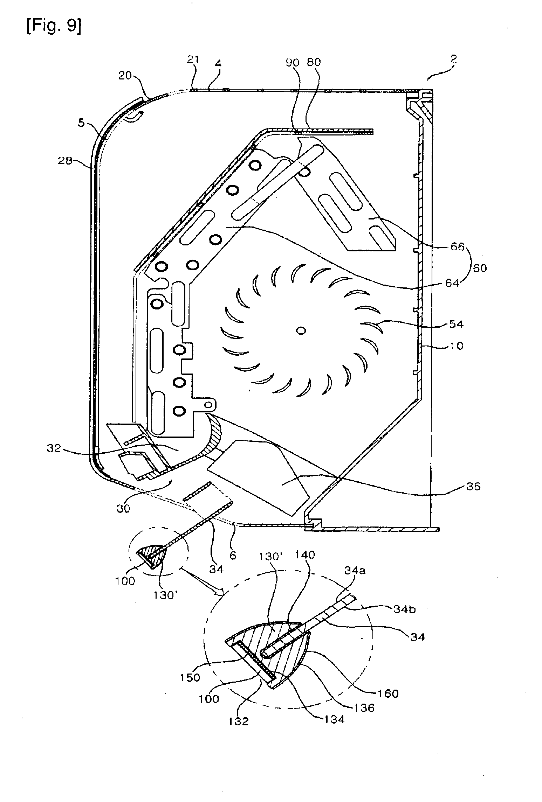

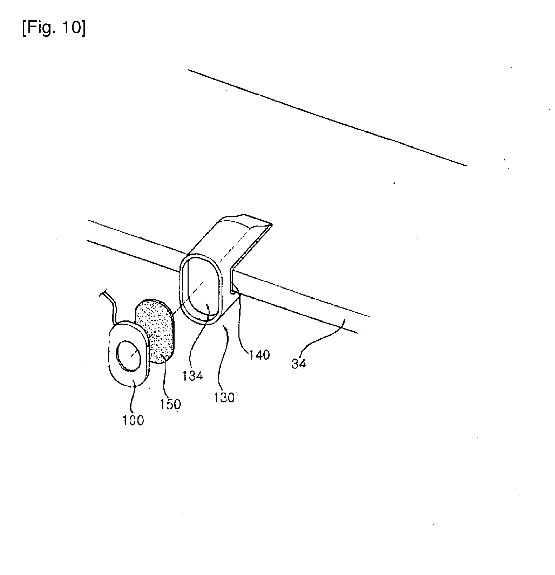

FIG. 9 is a longitudinal cross-sectional view of an operating air conditioner according to a second exemplary embodiment of the present invention, and FIG. 10 is an enlarged perspective view illustrating a wind adjustment member of an air conditioner according to a second exemplary embodiment of the present invention.

In the air conditioner according to the present exemplary embodiment, the harmful insect extermination device 100 is disposed orthogonal to an air discharge direction of the wind adjustment member 34, and a harmful insect extermination device holder 130' is installed to be protruded in a direction orthogonal to an air flow direction at the front end or the rear end of the wind adjustment member 34 or between the front end and the rear end of the wind adjustment member 34.

The harmful insect extermination device holder 130' is formed so that an inner surface 134 opposite to the harmful insect extermination device 100 is orthogonal to air guidance surfaces 34a and 34b of the wind adjustment member 34.

In the air conditioner according to the present exemplary embodiment, a disposition direction of the harmful insect extermination device 100 and configurations other than the harmful insect extermination device holder 130' and operation thereof are identical to or similar to those of the first exemplary embodiment of the present invention and therefore a detailed description thereof will be omitted.

In the air conditioner according to the present exemplary embodiment, upon a rotation of the wind adjustment member 34, air discharged through the air discharge port 6 is discharged in a direction guided by the wind adjustment member 34 and in this case, sound waves generated in the harmful insect extermination device 100 are propagated in a direction in which the wind adjustment member 34 faces.

That is, because the harmful insect extermination device 100 generates sound waves in a discharge guidance direction of air-conditioned air, harmful insects of an area in which air-conditioned air is discharged can be effectively exterminated.

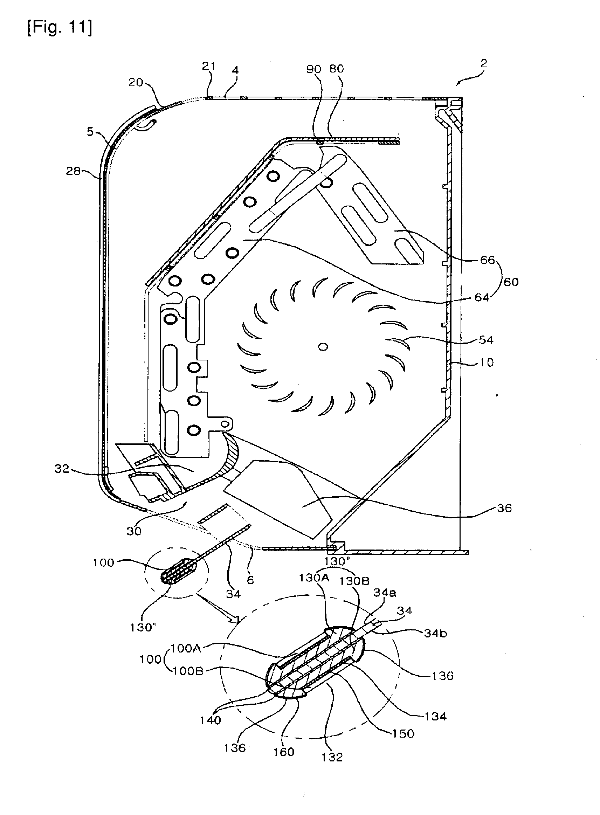

FIG. 11 is a longitudinal cross-sectional view of an operating air conditioner according to a third exemplary embodiment of the present invention.

In the air conditioner according to the present exemplary embodiment, the harmful insect extermination device 100 is discharged parallel to an air guidance direction of the wind adjustment member 34.

In general, in an wall-mounted air conditioner, because an air guidance surface 34a of one side of the wind adjustment member 34 faces a ceiling of indoor and an air guidance surface 34b of the other side faces a wall surface in which the air conditioner is installed, in the air conditioner, when the harmful insect extermination device 100 is disposed parallel to an air guidance direction of the wind adjustment member 34, it is preferable that the harmful insect extermination devices 100 are installed in each of a plurality of air inhalation surfaces 34a and 34b of the wind adjustment member 34.

That is, when the wind adjustment member 34 opens the air discharge port 6, the air conditioner according to the present exemplary embodiment includes a first harmful insect extermination device 100A installed in a surface 34a toward a ceiling of the wind adjustment member 34 or a wall surface of an opposite side of the air conditioner, and a second harmful insect extermination device 100B installed in the other surface 34b facing a floor surface of the wind adjustment member 34 or a wall surface in which the air conditioner is installed.

A harmful insect extermination device holder 130" includes a first harmful insect extermination device holder 130A in which the first the harmful insect extermination device 100A is installed and a first harmful insect extermination device holder 130B in which the second harmful insect extermination device 100B is installed, and the first harmful insect extermination device holder 130A and the first harmful insect extermination device holder 130B are formed so that an inner surface 134 opposite to the harmful insect extermination device 100 is parallel to the air guidance surfaces 34a and 34b of the wind adjustment member 34.

In the air conditioner according to the present exemplary embodiment, a disposition direction of the harmful insect extermination device 100 and configurations other than the harmful insect extermination device holder 130" and operation thereof are identical to or similar to those of the present exemplary embodiment and therefore a detailed description thereof will be omitted.

In the air conditioner according to the present exemplary embodiment, sound waves generated in the first the harmful insect extermination device 100A are propagated toward an approximately upper part and center of indoor, sound waves generated in the second harmful insect extermination device 100B are propagated toward an approximately lower part and center of indoor, and when the wind adjustment member 34 rotates, sound waves for exterminating mosquitoes are uniformly propagated to an upper part and a lower part of indoor while further extending a propagation area thereof.

In the air conditioner according to the present exemplary embodiment, upon performing an air-conditioning operation such as a cooling operation, cooling air is guided to the air guidance surfaces 34a and 34b of the wind adjustment member 34, a maximum width in which the first and second harmful insect extermination devices 100A and 100B and the first and second harmful insect extermination device holders 130A and 130B are protruded from the air guidance surfaces 34a and 34b is formed smaller than cases of the first exemplary embodiment and the second exemplary embodiment of the present invention, and flow resistance due to the first and second harmful insect extermination devices 100A and 100B and the first and second harmful insect extermination device holders 130A and 130B is minimized and thus air-conditioned air is more rapidly discharged to indoor and harmful insects can be effectively exterminated.

The embodiment of the invention being thus described, it will be obvious that the same may be varied in many ways. Such variations are not to be regarded as a departure from the scope of the appending claims, and all such modifications as would be obvious to one skilled in the art are intended to be included within the scope of the following claims.

### Industrial Applicability

Because the harmful insect extermination device according to the present invention can exterminate harmful insects of a wide area of indoor while moving together with a wind adjustment member, high harmful insect extermination performance is obtained.

In an air conditioner according to the present invention having the above-described configuration, when a wind adjustment member rotates, the harmful insect extermination device propagates sound waves in a wide area of indoor while moving a position thereof by the wind adjustment member and thus while minimizing the number and a cost of the harmful insect extermination devices, harmful insects can be effectively exterminated.

Further, when the air conditioner is stopped, because the harmful insect extermination device is not viewed from the outside, an external appearance thereof is improved, and because the harmful insect extermination device is protected by the wind adjustment member, damage of the harmful insect extermination device can be prevented and a lifetime of the harmful insect extermination device can be maximized.

Further, because the harmful insect extermination device is protected by the harmful insect extermination device holder, a lifetime of the harmful insect extermination device can be extended.

Further, because a curved portion is formed in the harmful insect extermination device holder, flow resistance of discharge air can be minimized.

Further, because the harmful insect extermination device is heat-insulated, damage due to moisture can be minimized.

Further, the harmful insect extermination device can most widely propagate sound waves toward indoor while minimizing flow resistance.

## Claims

1. An air conditioner comprising:
a main body (2) in which an air inhalant port (4) and an air discharge port (6) are formed to discharge air after inhaling air and performing air conditioning:
a wind adjustment member (34) rotatably disposed at the main body (2) to adjust the wind of air discharged to the air discharge port (6);
a wind adjustment member driving device (35) for rotating the wind adjustment member (34); **characterized in that** the air conditioner furthermore comprises:
a harmful insect extermination device (100) installed in the wind adjustment member (34) to exterminate harmful insects while changing a position according to a rotation of the wind adjustment member (34).

2. The air conditioner of claim 1, wherein the wind adjustment member (34) is disposed to open and shut the air discharge port, (6) and when the wind adjustment member (34) shuts the air discharge port (6), the harmful insect extermination device is installed in a surface toward the inside of the main body (2).

3. The air conditioner of claim 1, further comprising a harmful insect extermination device holder (130) in which the harmful insect extermination device (100) is mounted and for protecting the harmful insect extermination device (100).

4. The air conditioner of claim 3, wherein the harmful insect extermination device holder (130) has a curved portion (136) at a periphery of the harmful insect extermination device (100).

5. The air conditioner of claim 3, wherein the harmful insect extermination device holder (130) is a protruding portion integrally protruded with an air guidance surface (34a, 34b) of the wind adjustment member (34).

6. The air conditioner of claim 3, wherein the harmful insect extermination device holder (130) is an insertion groove formed to insert the harmful insect extermination device (100) into an air guidance surface (34a, 34b) of the wind adjustment member (34).

7. The air conditioner of claim 3, wherein the harmful insect extermination device holder (130) is a harmful insect extermination device case coupled to an air guidance surface (34a, 34b) of the wind adjustment member (34).

8. The air conditioner of claim 7, further comprising a case heat-insulation member (140) disposed between the harmful insect extermination device case and the wind adjustment member (34).

9. The air conditioner of claim 3, wherein the harmful insect extermination device (100) is a speaker for generating sound waves of a frequency band of male mosquitoes, and
the harmful insect extermination device holder (130) has an opening surface (132) for passing through sound waves generated in the speaker.

10. The air conditioner of claim 9, further comprising an internal heat-insulation member (150) positioned between the harmful insect extermination device holder (130) and the speaker.

11. The air conditioner of claim 9, further comprising a holder heat-insulation member (160) installed to cover a surface other than an opening surface (132) of the harmful insect extermination device holder (130).

12. The air conditioner of claim 1, wherein the harmful insect extermination device (100) is disposed oblique to an air guidance direction of the wind adjustment member (34).

13. The air conditioner of claim 1, wherein the harmful insect extermination device (100) is disposed at a front end of the wind adjustment member (34).

14. The air conditioner of one of claims 1 to 13, wherein the air conditioner comprises a main controller (72) installed in the main body (2) to control the wind adjustment member driving device (35) and a harmful insect extermination device controller (110) connected to the main controller (72) using a first lead line (106) and connected to the harmful insect extermination device using (100) a second lead line (108) to control the harmful insect extermination device (100).

15. The air conditioner of claim 14, wherein the main controller (72) controls the harmful insect extermination device controller (110) by allowing the harmful insect extermination device (100) to generate sound waves of a frequency band of male mosquitoes upon performing operation for exterminating harmful insects and controls a mode of the wind adjustment member driving device (35) to a reciprocation swing mode so that the wind adjustment member (34) performs a reciprocation swing.

## Patentansprüche

1. Klimaanlage, die aufweist:
einen Hauptkörper (2), in dem eine Lufteinsaugöffnung (4) und eine Luftabgabeöffnung (6) ausgebildet sind, um nach dem Einsaugen von Luft Luft abzugeben und eine Klimatisierung durchzuführen;
ein Windeinstellelement (34), das drehbar an dem Hauptkörper (2) angeordnet ist, um den Wind von Luft, die an die Luftabgabeöffnung (6) abgegeben wird, einzustellen;
eine Windeinstellelement-Antriebsvorrichtung (35) zum Drehen des Windeinstellelements (34), **dadurch gekennzeichnet, dass** die Klimaanlage ferner aufweist:
eine Vernichtungsvorrichtung (100) für schädliche Insekten, die in dem Windeinstellelement (34) installiert ist, um schädliche Insekten zu vernichten, während eine Position gemäß einer Drehung des Windeinstellelements (34) geändert wird.

2. Klimaanlage nach Anspruch 1, wobei das Windeinstellelement (34) angeordnet ist, um die Luftabgabeöffnung (6) zu öffnen und zu schließen, wobei die Vernichtungsvorrichtung (100) für schädliche Insekten in einer Oberfläche in Richtung des Inneren des Hauptkörpers (2) installiert ist, wenn das Windeinstellelement (34) die Abgabeöffnung (6) schließt.

3. Klimaanlage nach Anspruch 1, die ferner eine Halterung (130) für die Vernichtungsvorrichtung für schädliche Insekten aufweist, in der die Vernichtungsvorrichtung (100) für schädliche Insekten montiert ist, und um die Vernichtungsvorrichtung (100) für schädliche Insekten zu schützen.

4. Klimaanlage nach Anspruch 3, wobei die Halterung (130) für die Vernichtungsvorrichtung für schädliche Insekten einen gekrümmten Abschnitt (136) an einem Umfang der Vernichtungsvorrichtung (100) für schädliche Insekten hat.

5. Klimaanlage nach Anspruch 3, wobei die Halterung (130) für die Vernichtungsvorrichtung für schädliche Insekten ein vorstehender Abschnitt ist, der integral mit einer Luftführungsoberfläche (34a, 34b) des Windeinstellelements (34) vorsteht.

6. Klimaanlage nach Anspruch 3, wobei die Halterung (130) für die Vernichtungsvorrichtung für schädliche Insekten eine Einsetzrille ist, die ausgebildet ist, um die Vernichtungsvorrichtung (100) für schädliche Insekten in eine Luftführungsoberfläche (34a, 34b) des Windeinstellelements (34) einzusetzen.

7. Klimaanlage nach Anspruch 3, wobei die Halterung (130) für die Vernichtungsvorrichtung für schädliche Insekten ein Gehäuse für die Vernichtungsvorrichtung für schädliche Insekten ist, das mit einer Luftführungsoberfläche (34a, 34b) des Windeinstellelements (34) gekoppelt ist.

8. Klimaanlage nach Anspruch 7, die ferner ein wärmeisolierendes Gehäuseelement (140) aufweist, das zwischen dem Gehäuse für die Vernichtungsvorrichtung für schädliche Insekten und dem Windeinstellelement (34) angeordnet ist.

9. Klimaanlage nach Anspruch 3, wobei die Vernichtungsvorrichtung (100) für schädliche Insekten ein Lautsprecher für die Erzeugung von Schallwellen mit einem Frequenzband männlicher Stechmücken ist, und
die Halterung (130) für die Vernichtungsvorrichtung für schädliche Insekten eine Öffnungsoberfläche (132) hat, um in dem Lautsprecher erzeugte Schallwellen hindurch zu lassen.

10. Klimaanlage nach Anspruch 9, die ferner ein inneres Wärmeisolierungselement (150) aufweist, das zwischen der Halterung (130) für die Vernichtungsvorrichtung für schädliche Insekten und dem Lautsprecher positioniert ist.

11. Klimaanlage nach Anspruch 9, die ferner ein Halterisolierungselement (160) aufweist, das installiert ist, um eine andere Oberfläche als eine Öffnungsoberfläche (132) der Halterung (130) für die Vernichtungsvorrichtung für schädliche Insekten zu bedecken.

12. Klimaanlage nach Anspruch 1, wobei die Vernichtungsvorrichtung (100) für schädliche Insekten schräg zu einer Luftführungsrichtung des Windeinstellelements (34) angeordnet ist.

13. Klimaanlage nach Anspruch 1, wobei die Vernichtungsvorrichtung (100) für schädliche Insekten an einem Vorderende des Windeinstellelements (34) angeordnet ist.

14. Klimaanlage nach einem der Ansprüche 1 bis 13, wobei die Klimaanlage aufweist: eine Hauptsteuerung (72), die in dem Hauptkörper (2) installiert ist, um die Windeinstellelement-Antriebsvorrichtung (39) zu steuern, und eine Steuerung (110) für die Vernichtungsvorrichtung für schädliche Insekten, die unter Verwendung einer ersten Führungsleitung (106) mit der Hauptsteuerung (72) verbunden ist und unter Verwendung einer zweiten Führungsleitung (108) mit der Vernichtungsvorrichtung (100) verbunden ist, um die Vernichtungsvorrichtung (100) für schädliche Insekten zu steuern.

15. Klimaanlage nach Anspruch 14, wobei die Hauptsteuerung (72) die Steuerung (110) für die Vernichtungsvorrichtung für schädliche Insekten steuert, indem sie zulässt dass die Vernichtungsvorrichtung (100) für schädliche Insekten beim Durchführen des Betriebs für die Vernichtung schädlicher Insekten Schallwellen mit einem Frequenzband männlicher Stechmücken erzeugt und eine Betriebsart der Windeinstellelement-Antriebsvorrichtung (35) auf eine Hin- und Herbewegungsbetriebsart steuert, so dass das Windeinstellelement (34) eine Hin- und Herbewegung durchführt.

## Revendications

1. Climatiseur, comprenant :
un corps principal (2) dans lequel un orifice d'aspiration d'air (4) et un orifice d'évacuation d'air (6) sont formés pour évacuer de l'air après avoir aspiré l'air et
avoir réalisé la climatisation ;
un élément de réglage de flux d'air (34) disposé de façon rotative dans le corps principal (2) pour régler le flux d'air évacué vers l'orifice d'évacuation d'air (6) ;
un dispositif d'entraînement d'élément de réglage de flux d'air (35) pour faire tourner l'élément de réglage de flux d'air (34) ; **caractérisé en ce que** le climatiseur comprend en outre :
un dispositif d'extermination d'insectes nuisibles (100) installé dans l'élément de réglage de flux d'air (34) pour exterminer des insectes nuisibles tout en changeant une position selon une rotation de l'élément de réglage de flux d'air (34).

2. Climatiseur selon la revendication 1, dans lequel l'élément de réglage de flux d'air (34) est disposé pour ouvrir et fermer l'orifice d'évacuation d'air (6), et lorsque l'élément de réglage de flux d'air (34) ferme l'orifice d'évacuation d'air (6), le dispositif d'extermination d'insectes nuisibles (100) est installé dans une surface vers l'intérieur du corps principal (2).

3. Climatiseur selon la revendication 1, comprenant en outre un organe de retenue de dispositif d'extermination d'insectes nuisibles (130) dans lequel le dispositif d'extermination d'insectes nuisibles (100) est monté et pour protéger le dispositif d'extermination d'insectes nuisibles (100).

4. Climatiseur selon la revendication 3, dans lequel l'organe de retenue de dispositif d'extermination d'insectes nuisibles (130) comporte une partie incurvée (136) à une périphérie du dispositif d'extermination d'insectes nuisibles (100).

5. Climatiseur selon la revendication 3, dans lequel l'organe de retenue de dispositif d'extermination d'insectes nuisibles (130) est une partie saillante en saillie d'une seule pièce avec une surface de guidage d'air (34a, 34b) de l'élément de réglage de flux d'air (34).

6. Climatiseur selon la revendication 3, dans lequel l'organe de retenue de dispositif d'extermination d'insectes nuisibles (130) est une rainure d'insertion formée pour insérer le dispositif d'extermination d'insectes nuisibles (100) dans une surface de guidage d'air (34a, 34b) de l'élément de réglage de flux d'air (34).

7. Climatiseur selon la revendication 3, dans lequel l'organe de retenue de dispositif d'extermination d'insectes nuisibles (130) est un boîtier de dispositif d'extermination d'insectes nuisibles accouplé à une surface de guidage d'air (34a, 34b) de l'élément de réglage de flux d'air (34).

8. Climatiseur selon la revendication 7, comprenant en outre un élément d'isolation thermique de boîtier (140) disposé entre le boîtier de dispositif d'extermination d'insectes nuisibles et l'élément de réglage de flux d'air (34).

9. Climatiseur selon la revendication 3, dans lequel le dispositif d'extermination d'insectes nuisibles (100) est un haut-parleur pour générer des ondes sonores d'une bande de fréquence de moustiques mâles, et
l'organe de retenue de dispositif d'extermination d'insectes nuisibles (130) comporte une surface d'ouverture (132) pour faire passer à travers des ondes sonores générées dans le haut-parleur.

10. Climatiseur selon la revendication 9, comprenant en outre un élément d'isolation thermique interne (150) positionné entre l'organe de retenue de dispositif d'extermination d'insectes nuisibles (130) et le haut-parleur.

11. Climatiseur selon la revendication 9, comprenant en outre un élément d'isolation thermique d'organe de retenue (160) installé pour couvrir une surface autre qu'une surface d'ouverture (132) de l'organe de retenue de dispositif d'extermination d'insectes nuisibles (130).

12. Climatiseur selon la revendication 1, dans lequel le dispositif d'extermination d'insectes nuisibles (100) est disposé obliquement à une direction de guidage d'air de l'élément de réglage de flux d'air (34).

13. Climatiseur selon la revendication 1, dans lequel le dispositif d'extermination d'insectes nuisibles (100) est disposé à une extrémité avant de l'élément de réglage de flux d'air (34).

14. Climatiseur selon l'une des revendications 1 à 13, dans lequel le climatiseur comprend un dispositif de commande principal (72) installé dans le corps principal (2) pour commander le dispositif d'entraînement d'élément de réglage de flux d'air (35) et un dispositif de commande de dispositif d'extermination d'insectes nuisibles (110) connecté au dispositif de commande principal (72) en utilisant une première ligne conductrice (106) et connecté au dispositif d'extermination d'insectes nuisibles (100) en utilisant une deuxième ligne conductrice (108) pour commander le dispositif d'extermination d'insectes nuisibles (100).

15. Climatiseur selon la revendication 14, dans lequel le dispositif de commande principal (72) commande le dispositif de commande de dispositif d'extermination d'insectes nuisibles (100) en permettant au dispositif d'extermination d'insectes nuisibles (100) de générer des ondes sonores d'une bande de fréquence de moustiques mâles lors de la réalisation d'une opération pour exterminer des insectes nuisibles et commande un mode du dispositif d'entraînement d'élément de réglage de flux d'air (35) à un mode de changement de mouvement en va-et-vient pour que l'élément de réglage de flux d'air (34) réalise un changement de mouvement en va-et-vient.
